# EUROPÄISCHE PATENTANMELDUNG

(11) **EP 3 170 642 A1**
(43) Veröffentlichungstag der Anmeldung: **24.05.2017**
(21) Anmeldenummer: 16201146.4
(22) Anmeldetag: 15.12.2010
(51) Int. Cl.: B29C 47/92, B29C 35/06, B29C 55/22, B29L 23/00, B29K 105/24, B29C 47/90, B29C 47/88, B29C 47/00, B29K 105/10, B29C 35/10, B29C 35/08

(54) **VERFAHREN ZUR HERSTELLUNG VON PEROXIDVERNETZTEN POLYETHYLENROHREN IN EINER EXTRUSIONSLINIE**

(30) Priorität: 23.01.2010 DE 102010005509
(62) Teilanmeldung aus: 10015646.2
(71) Anmelder: iNOEX GmbH, 49324 Melle (DE)
(72) Erfinder: Schmuhl, Jörg, 15711 Königs Wusterhausen (DE); Deters, Martin, 49143 Bissendorf (DE)
(74) Vertreter: Bremer, Ulrich

(57) **Zusammenfassung**

Die vorliegende Erfindung betrifft eine Extrusionslinie zur Herstellung von peroxidvernetzten Polyethylenrohren mit einem Extruder, einem Vernetzungsofen und einem Abzug, wobei der Vernetzungsofen eine erste Erwärmungsstrecke von seinem Einlauf bis zu einer angetriebenen Umlenkrolle und eine zweite Erwärmungsstrecke von der Umlenkrolle bis zu seinem Auslauf aufweist. Aufgabe der Erfindung ist es, eine derartige Extrusionslinie zur Verfügung zu stellen, mit der Rohre mit minimalem Schrumpf produziert werden können. Gelöst wird diese Aufgabe dadurch, dass die Umlenkrolle (7) des Vernetzungsofens (13) höhenverstellbar und die Erwärmungsstrecken (A, B) aus der Horizontalen winkelverstellbar sind.

## Beschreibung

Die vorliegende Erfindung betrifft eine Extrusionslinie zur Herstellung von peroxidvernetzten Polyethylenrohren gemäß dem Oberbegriff des Anspruchs 1.

Es ist bekannt, dass die Eigenschaften von Polymerisaten durch Vernetzung verbessert werden können. Peroxidvernetzte Polyethylenrohre haben gegenüber unvernetzten Rohren eine erhöhte Warmfestigkeit, eine verbesserte mechanische Festigkeit und eine erhöhte Chemikalienfestigkeit, was sie für Fußbodenheizungsrohre, Warmwasserrohre, Trinkwasserrohre etc. geeignet macht.

In der DE 696 22 053 T2 ist unter anderem eine Extrusionslinie zur Inline-Vernetzung von Polyethylenrohren beschrieben. Der Extruder dieser Linie hat einen nach oben abgewinkelten Kopf, der in einem Vernetzungsofen mündet, in den das Rohr dem zur Folge vertikal hineinextrudiert wird. Das Rohr wird im Vernetzungsofen in einer ersten Erwärmungsstrecke senkrecht nach oben geführt, dort auf einer angetriebenen Umlenkrolle um 180 Grad umgelenkt und läuft dann in einer zweiten Erwärmungsstrecke senkrecht nach unten, wo es am Auslauf des Vernetzungsofens durch eine weitere Rolle in die Horizontale umgelenkt wird und anschließend in eine Kalibrier- und Kühlstation einläuft. Auf dem Weg durch den Vernetzungsofen wird das Rohr an Infrarotstrahlern vorbeigeführt, die die für eine Vernetzung erforderliche Wärme in das Rohr einbringen. An die Kalibrier- und Kühlstation schließt sich ein Abzug an, mit dem das Rohr durch die Extrusionslinie gezogen wird, um abschließend, dem Abzug folgend, auf eine Trommel aufgewickelt zu werden.

In der DE 10 2007 050 939 A1 ist ein Vernetzungsofen beschrieben, der eine erste Erwärmungsstrecke von seinem Einlauf bis zu einer angetriebenen Umlenkrolle und eine zweite Erwärmungsstrecke von seiner Umlenkrolle bis zu seinem Auslauf aufweist. Dabei wird ein horizontal extrudiertes Rohr am Einlauf des Vernetzungsofens zunächst auf einer Rolle um 90° umgelenkt, so dass es den Vernetzungsofen über die erste Erwärmungsstrecke vertikal nach oben durchläuft, dort an der Umlenkrolle um 180° umgelenkt wird und anschließend den Vernetzungsofen in der zweiten Erwärmungsstrecke vertikal nach unten durchläuft. An einer am Auslauf des Vernetzungsofens vorgesehenen Umlenkrolle wird das Rohr wieder in die Horizontale umgelenkt.

Der extrudierte Schmelzeschlauchs quillt nach seinem Austritt aus dem Rohrkopf des Extruders auf. Um ein Rohr mit einem geforderten Nenndurchmesser produzieren zu können, muss das Rohr daher nachfolgend in der Extrusionslinie gestreckt werden. Diese Streckung hat allerdings nachteilige Folgen für den Schrumpf, der ein wesentliches Qualitätsmerkmal des Endproduktes ist. Dieser Schrumpf muss möglichst minimal sein.

Aufgabe der vorliegenden Erfindung ist es daher, eine Extrusionslinie mit einem Vernetzungsofen zur Verfügung zu stellen, welche einen minimalen Schrumpf des produzierten Rohres gewährleistet.

Diese Aufgabe wird erfindungsgemäß mit einer Extrusionslinie gelöst, welche die Merkmale des Anspruchs 1 aufweist.

Die vorliegende Erfindung betrifft eine Extrusionslinie mit einem Vernetzungsofen, der eine erste Erwärmungsstrecke von seinem Einlauf bis zu einer angetriebenen Umlenkrolle und eine zweite Erwärmungsstrecke von der Umlenkrolle bis zu seinem Auslauf aufweist, wobei die Umlenkrolle höhenverstellbar ist und die Erwärmungsstrecken aus der Horizontalen winkelverstellbar sind. Diese Ausführung des Vernetzungsofens beruht auf der Erkenntnis, dass eine Streckung des Rohres in der ersten Erwärmungsstrecke einen geringeren Einfluss auf den Schrumpf des Endproduktes hat als die Streckung in der zweiten Erwärmungsstrecke.

Ein derartiger Vernetzungsofen kommt bei Rohren mit größeren Durchmessern zum Einsatz, bei denen eine Umlenkung um 180 Grad auf der Umlenkrolle, wie bei den bekannten Vernetzungsöfen üblich, nur schwer zu realisieren ist. Durch die Höhenverstellbarkeit der Umlenkrolle und der Möglichkeit der Winkelverstellung der Erwärmungsstrecken kann auch bei Rohren mit größerem Durchmesser die Streckung in der ersten Erwärmungsstrecke optimal beeinflusst werden, in dem der Anpressdruck zwischen der Umlenkrolle und dem extrudierten Rohr optimal eingestellt werden kann.

Der Vernetzungsofen kann aber auch bei Rohren kleineren Durchmessers zum Einsatz kommen, wobei die Verstellbarkeit der Umlenkrolle und der Erwärmungsstrecken neben der Antriebsgeschwindigkeit der Umlenkrolle und der Geschwindigkeit des Abzugs eine weitere Möglichkeit der Beeinflussung der Streckung des extrudierten Rohres bietet.

Eine vorteilhafte Ausgestaltung der Erfindung ergibt sich aus dem Unteranspruch.

Die Erfindung wird nachstehend anhand von Ausführungsbeispielen näher erläutert. In der dazu gehörigen Zeichnung zeigt:
- Fig. 1: eine schematische Darstellung einer Extrusionslinie zur Herstellung von peroxidvernetzten Polyethylenrohren mit einem nicht erfindungsgemäß ausgeführten Vernetzungsofen,
- Fig. 2: eine schematische Darstellung einer Extrusionslinie zur Herstellung von peroxidvernetzten Polyethylenrohren mit einem erfindungsgemäß ausgeführten Vernetzungsofen in Arbeitsteilung, und
- Fig. 3: eine vergrößerte Darstellung des in der Extrusionslinie gemäß Fig. 2 eingesetzten Vernetzungsofens in Anfahrstellung.

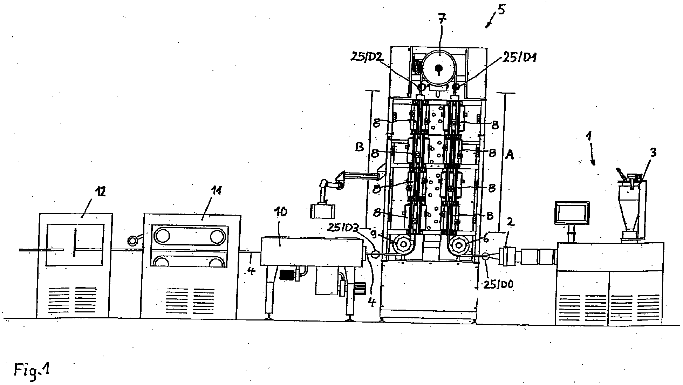

Die in Figur 1 gezeigte Extrusionslinie umfasst einen Extruder 1 mit einem Rohrkopf 2 und einem Aufgabetrichter 3. Über den Aufgabetrichter 3 werden dem Extruder 1 mittels einer nicht dargestellten Dosiereinrichtung Polyethylen in Granulat- oder Pulverform, ein Stabilisator sowie Peroxid zugeführt. Diese Mischung wird im Extruder 1 erwärmt, geknetet und plastifiziert. Anschließend wird die dadurch gebildete, formbare Masse durch einen ringförmigen Durchtrittsspalt des Rohrkopfes 2 gedrückt. Nach dem Austritt aus dem Rohrkopf 2 läuft das heiße, noch verformbare Rohr 4 in einen Vernetzungsofen 5 ein. Das horizontal extrudierte Rohr 4 wird am Einlauf des Vernetzungsofens 5 zunächst auf einer Rolle 6 um 90 Grad umgelenkt, so dass es den Vernetzungsofen 5 über eine erste Erwärmungsstrecke A vertikal nach oben durchläuft. Dort ist eine angetriebene größere Umlenkrolle 7 angeordnet, auf der das Rohr 4 um 180 Grad umgelenkt wird und anschließend den Vernetzungsofen 5 in einer zweiten Erwärmungsstrecke B vertikal nach unten durchläuft.

Die Erwärmungsstrecken A und B weisen jeweils vier aufeinander folgende Infrarotstrahlungsmodule 8 auf, über die die für eine Vernetzung erforderliche Wärme in das Rohr 4 eingebracht wird.

Am Auslauf des Vernetzungsofens 5 wird das Rohr 4 auf einer weiteren Rolle 9 um 90 Grad in die Horizontale umgelenkt. Nach dem Verlassen des Vernetzungsofens 5 läuft das Rohr 4 in eine Kalibrier- und Kühleinheit 10 ein, in der es abgekühlt wird. Der Kalibrier- und Kühleinheit 10 schließt sich in der Extrusionslinie eine Abzugseinheit 11 an, mit der das extrudierte Rohr 4 durch die Extrusionslinie gezogen wird. Den Abschluss der Extrusionslinie bildet eine Sägeeinheit 12, mit der Rohrabschnitte gewünschter Länge vom extrudierten Rohr 4 abgelängt werden.

Das extrudierte Rohr 4 (Schmelzeschlauch) quillt nach dem Austritt aus dem Rohrkopf 2 auf, so dass eine Streckung des Rohres 4 im Vernetzungsofen 5 erforderlich ist, um den gewünschten Rohrnenndurchmesser in den einzuhaltenden Toleranzgrenzen produzieren zu können. Zur Erfassung dieser Streckung sind im bzw. am Vernetzungsofen 5 vier symbolisch durch Kreise dargestellte Messstellen 25 vorgesehen, z. B. in Form von Lasersensoren, mit denen der Durchmesser D0 vor der ersten Erwärmungsstrecke A und der Durchmesser D1 nach der ersten Erwärmungsstrecke A, sowie der Durchmesser D2 vor der zweiten Erwärmungsstrecke B und der Durchmesser D3 nach der zweiten Erwärmungsstrecke B ermittelt werden. Die Streckung des Rohres 4 in der ersten Erwärmungsstrecke A ergibt sich dann aus dem Verhältnis S1 = D0/D1 und die Streckung in der zweiten Erwärmungsstrecke B aus dem Verhältnis S2 = D2/D3.

Das Rohr 4, das durch den Vernetzungsofen 5 geführt wird, wird mittels der oberen Umlenkrolle 7 durch den Vernetzungsofen 5 gezogen. Dabei wird die Geschwindigkeit, d. h. die Drehzahl der Umlenkrolle 7 in Abhängigkeit vom Massedurchsatz am Rohrkopf 2 so geregelt, dass die für den zu produzierenden Rohrnenndurchmesser erforderliche Streckung überwiegend in der ersten Erwärmungsstrecke A realisiert wird.

Durch die in der Extrusionslinie befindliche Abzugseinheit 11 kann eine von der Umlenkrolle 7 abweichende Liniengeschwindigkeit eingestellt werden. Wäre die Abzugsgeschwindigkeit größer als die Geschwindigkeit der Umlenkrolle 7, würde das Rohr 4 in der zweiten Erwärmungsstrecke B gestreckt werden. Das ist aber zu vermeiden, da diese Streckung einen negativen Einfluss auf den einzuhaltenden Schrumpf hätte. Die Geschwindigkeit der Abzugseinheit 11 wird daher durch eine Folgeregelung der durch die Umlenkrolle 7 vorgegebenen Ofengeschwindigkeit angepasst, d. h., wenn die Ofengeschwindigkeit geändert wird, folgt die Abzugsgeschwindigkeit im festen Verhältnis der Ofengeschwindigkeit. Diese Folgeregelung wird durch eine zweite Regelung überlagert, mit der die Geschwindigkeit der Abzugseinheit 11 soweit reduziert wird, dass die Streckung S2 gegen 0 geht und damit der zu erwartende Schrumpf minimiert wird.

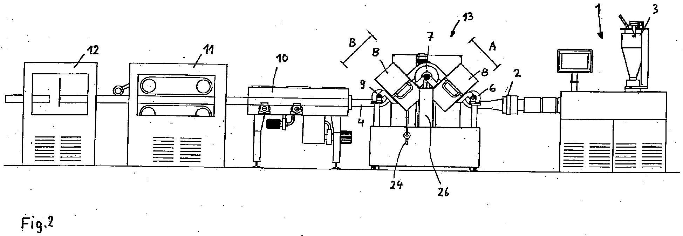

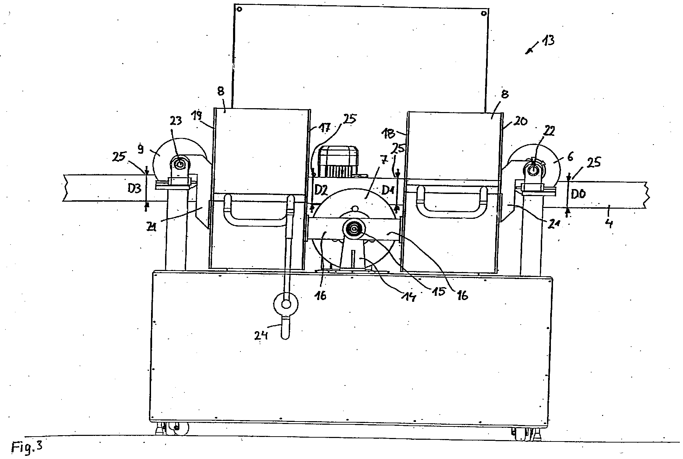

In die Figuren 2 und 3 ist eine Extrusionslinie mit einem erfindungsgemäß ausgeführten Vernetzungsofen 13 dargestellt. Ansonsten ist diese Extrusionslinie mit der in Figur 1 gezeigten Extrusionslinie identisch. Figur 3 zeigt eine vergrößerte Darstellung dieses Vernetzungsofens 13 in seiner Anfahrstellung, während der Vernetzungsofen 13 in Figur 2 in seiner Arbeitsstellung dargestellt ist.

Ein derartiger Vernetzungsofen 13 kommt zum Einsatz, wenn Rohre 4 größeren Durchmessers, z. B. über 32 mm, produziert werden sollen, da eine Umlenkung derartiger Rohre um 180 Grad wie in dem Vernetzungsofen 5 gemäß Figur 1 in der Praxis schwer zu realisieren ist.

Der Vernetzungsofen 13 wird nachstehend näher beschrieben, wobei für gleiche oder gleich wirkende Bauteile die Bezugszeichen des nicht erfindungsgemäßen Ausführungsbeispiels gemäß Figur 1 übernommen werden.

Der Vernetzungsofen 13 besitzt eine Rolle 6 am Einlauf und eine Rolle 9 am Auslauf sowie eine zwischen diesen beiden Rollen 6 und 9 angeordnete, größere und angetriebene Umlenkrolle 7. Zwischen den Rollen 6 und 7 bzw. 7 und 9 ist jeweils ein Infrarotstrahlungsmodul 8 angeordnet, wobei das zwischen den Rollen 6 und 7 angeordnete Infrarotstrahlungsmodul 8 die erste Erwärmungsstrecke A und das zwischen den Rollen 7 und 9 angeordnete Infrarotstrahlungsmodul 8 die zweite Erwärmungsstrecke B bildet.

Auch bei diesem Ausführungsbeispiel werden die Durchmesser D0, D1, D2 und D3 vor und nach der ersten Erwärmungsstrecke A bzw. der zweiten Erwärmungsstrecke B erfasst.

Die Umlenkrolle 7 bildet mit beidseitig angeordneten Lagerböcken 14 eine Drehachse 15 aus. Die beiden Lagerböcke 14 sind auf einem Hubzylinder 26 (Fig. 2) angeordnet.

Auf der Drehachse 15 der Umlenkrolle 7 sind zwei Tragarme 16 schwenkbar gelagert, die an ihren der Drehachse 15 abgewandten Enden starr mit einer jeweils zugeordneten Gehäusewand 17 bzw. 18 der Infrarotstrahlungsmodule 8 verbunden sind. Die gegenüberliegenden Gehäusewände 19 bzw. 20 der Infrarotstrahlungsmodule 8 sind ebenfalls starr mit zwei weiteren Tragarmen 21 verbundenen, deren anderen Enden schwenkbar auf den Drehachsen 22 und 23 der Rollen 6 bzw. 9 gelagert sind.

Figur 3 zeigt die Anfahrstellung des Vernetzungsofens 13, bei der das vom Extruder 1 kommende Rohr 4 horizontal durch den Vernetzungsofen 13 geführt ist.

Um die Streckung S1 und S2 gemäß dem vorhergehenden Ausführungsbeispiel regeln zu können, muss der Vernetzungsofen 13 aus seiner in Figur 3 gezeigten Anfahrstellung in eine in Figur 2 gezeigte Arbeitsstellung überführt werden. Dazu muss der Hubzylinder 26 ausgefahren werden, was durch Betätigung eines Handhebels 24 erreicht wird. Die Umlenkrolle 7 fährt dadurch in eine erhöhte Position und nimmt die Infrarotstrahlungsmodule 8 über die Tragarme 16 mit, wodurch die Infrarotbestrahlungsmodule 8 zwangsgesteuert durch die verschwenkenden Tragarme 16 und 21 synchron mit der Höhenverstellung der Umlenkrolle 7 winkelverstellt werden, so dass sie sich der durch die Höhenverstellung der Umlenkrolle 7 ergebenden Neigung des Rohres 4 anpassen.

Die Steuerung der Extrusionslinie hinsichtlich der Streckungen S1 und S2 des extrudierten Rohres 4 erfolgt wie bei dem nicht erfindungsgemäßen Ausführungsbeispiel gemäß Figur 1.

## Patentansprüche

1. Extrusionslinie zur Herstellung von peroxidvernetzten Polyethylenrohren mit einem Extruder, einem Vernetzungsofen und einem Abzug, wobei der Vernetzungsofen eine erste Erwärmungsstrecke von seinem Einlauf bis zu einer angetriebenen Umlenkrolle und eine zweite Erwärmungsstrecke von seiner Umlenkrolle bis zu seinem Auslauf aufweist, **dadurch gekennzeichnet, dass** die Umlenkrolle (7) höhenverstellbar ist, und die Erwärmungsstrecken (A, B) aus der Horizontalen winkelverstellbar sind.

2. Extrusionslinie nach Anspruch 1 , **dadurch gekennzeichnet, dass** die Winkelverstellung an die Höhenverstellung gekoppelt ist.
